# EUROPÄISCHE PATENTANMELDUNG

(11) **EP 1 524 632 A2**
(43) Veröffentlichungstag der Anmeldung: **20.04.2005**
(21) Anmeldenummer: 04018667.8
(22) Anmeldetag: 06.08.2004
(51) Int. Cl.: G07F 17/32

(54) **Multifunktionaler Automat**

(30) Priorität: 16.10.2003 DE 10348094
(71) Anmelder: Deutsche Telekom AG, 53113 Bonn (DE)
(72) Erfinder: Hansche, Andreas, Dipl.-Ing., 50169 Kerpen (DE); Wagner, Robert, Dipl.-ing., 53343 Wachtberg (DE)

(57) **Zusammenfassung**

Die Erfindung betrifft Automatenterminals zur Abwicklung von Diensten.

Eine Aufgabe der Erfindung ist es, einen neuen konstruktiven Weg aufzuzeigen, mit welchem durch ein öffentlich zugängliche Automatenterminal eine Vielzahl von Diensten abwickelbar ist.

Die Erfindung schlägt hierzu ein multifunktionales öffentliches Automatenterminal (100, 100') zum Abwickeln von wenigstens zwei verschiedenen, voneinander unabhängigen Diensten vor, und zwar mit wenigstens einer öffentlich zugänglichen Ein- und Ausgabeeinrichtung (1, 2, 3, 4, 5,) und einer zugeordneten Vorrichtung (6, 8) zum Erkennen und Abwickeln eines unter Ansprechen auf eine Benutzereingabe auswählbaren Dienstes.

## Beschreibung

Die Erfindung betrifft ein multifunktionales Automatenterminal, eine hierfür angepasste Datenverarbeitungseinrichtung sowie ein System mit einer Vielzahl von vernetzen multifunktionalen Automatensystemen.

Viele der heute aufgestellten Automaten, abgesehen solcher für eine Warendistribution, können nur einen genau definierten Zweck erfüllen. Beispielsweise dienen sie als Bankautomat, als Fahrkartenautomat, als Glücksspielautomat oder als Parkticketautomat. Entsprechend häufig finden sich diese Automaten demzufolge nur an solchen Orten, wo ihre spezielle Funktion auch benötigt wird, wie beispielsweise Fahrkartenautomaten an Haltestellen und/oder Bahnhöfen.

Nachteilig hierbei ist insbesondere, dass einerseits durch die Spezialisierung der Automaten in der Regel nur relativ geringe Stückzahlen benötigt werden und andererseits jedoch viele dieser Automaten auf gleichen oder ähnlichen Ein/Ausgabeeinrichtungen, wie beispielsweise Speicher/Chipkartenleser, Bargeldein-/-ausgabe, auch mit Geldprüfeinrichtungen, Bildschirmanzeige, Drucker, Tastatur usw., und/oder Programmen zur Steuerung der den Ein/ausgabeeinrichtungen jeweils zugeordneten Schnittstellen basieren, welches sich insbesondere bei der Fertigung kostensteigernd auswirkt.

Darüber hinaus müssen, wenn an einem Ort mehrere Dienste parallel angeboten werden sollen, folglich eine entsprechend große Anzahl an spezialisierten Automaten bereitgestellt werden, welches sich wiederum kostensteigernd, insbesondere auch bei der Wartung der Automaten auswirkt.

Eine Aufgabe der Erfindung ist es daher, einen neuen konstruktiven Weg aufzuzeigen, mit welchem den vorstehend aufgezeigten Problemen wirksam entgegengetreten werden kann und insbesondere durch ein öffentlich zugängliches Automatenterminal eine Vielzahl von Diensten abwickelbar ist.

Die erfindungsgemäße Lösung der Aufgabe ist auf höchst überraschende Weise bereits durch einen Gegenstand mit den Merkmalen eines der anhängenden unabhängigen Ansprüche gegeben.

Vorteilhafte und/oder bevorzugte Ausführungsformen oder Weiterbildungen sind Gegenstand der jeweiligen abhängigen Ansprüche.

Erfindungsgemäß ist somit ein multifunktionales öffentliches Automatenterminal zum Abwickeln von wenigstens zwei verschiedenen, voneinander unabhängigen Diensten vorgeschlagen, welches hierzu wenigstens eine öffentlich zugängliche Ein- und Ausgabeeinrichtung aufweist. Dem Automatenterminal zugeordnet ist eine Vorrichtung zum Erkennen und Abwickeln eines unter Ansprechen auf eine Benutzereingabe auswählbaren Dienstes.

Die Erfindung gewährleistet somit erstmalig die Nutzung mehrerer unterschiedlicher Dienste von lediglich einem Automatenterminal aus. Hierdurch lassen sich die Fertigungs-, Bereitstellungs- und Wartungskosten insgesamt wesentlich senken.

Um auf eine einfache Art die definierte Zusammenführung einer Vielzahl von Ein- und Ausgabeeinrichtungen zu ermöglichen, schlägt die Erfindung eine mit den Schnittstellen der Einund Ausgabeeinrichtungen verbundene Schnittstellensteuerung und wenigstens eine mit der Schnittstellensteuerung verbindbare Datenverarbeitungseinrichtung vor.

Vorteilhafter Weise hat jede Datenverarbeitungseinrichtung Zugriff auf wenigstens eine Datenbank mit abrufbar gespeicherten spezifischen Dienstbasierten Daten, um von den Eingabeeinrichtungen erhaltenen Informationen/Daten und/oder für die Ausgabeeinrichtung vorgesehenen Informationen/Daten dienstbasiert und/oder basierend auf spezifischen Verarbeitungsregeln zur Weiterverarbeitung mit den Daten der Datenbank in Beziehung zusetzen.

Bevorzugte Ausführungsformen sehen hierbei eine zumindest temporäre Datenübertragungsverbindung zu wenigstens einem Kommunikationssystem wenigstens eines Dienstanbieters vor, wobei die Datenverarbeitungseinrichtung und/oder Datenbank im Terminal und/oder in dem Kommunikationssystem integriert sein kann. Hierdurch ist eine Aktualisierung der Verarbeitungslogik und/oder der Datenbankinhalte, im Wesentlichen unabhängig vom jeweiligen Aufstellungsort der Terminals gewährleistet. Hierzu ist ferner bevorzugt vorgesehen, eine im Terminal integrierte Verarbeitungslogik maßgeblich durch Software auszubilden. Insbesondere bei einer in dem Kommunikationssystem angeordneten Verarbeitungslogik bildet jedoch neben einem Einsatz von Software auch der Einsatz von Hardware eine zweckmäßige Ausführungsform.

Werden Datenübertragungseinrichtungen eingesetzt, die dienstbasierte spezifische Daten zur zielgerichteten Übertragung über ein Telekommunikationsnetz entsprechend transformieren und/oder Dienstbasierte spezifische Daten nach Erhalt über ein Telekommunikationsnetz zur zielgerichteten Weiterleitung entsprechend zurück transformieren, ist die Vernetzung einer Vielzahl von Automatenterminal mit einer Vielzahl von Kommunikationssystemen einer Vielzahl von Dienstanbietern auf einfache Weise umsetzbar. Darüber hinaus können sich mehrere Dienstanbieter jeweils ein Terminal teilen und die jeweils angebotenen Dienste entsprechend definiert aktualisieren und kontrollieren. Dies ist ferner im Wesentlichen unabhängig davon, ob jeder Dienstanbieter dies separat durchführt, oder die Aktualisierung und Kontrolle von Diensten verschiedener Anbieter einem hierfür autorisierten, zwischengeschalteten Dienstanbieter übertragen ist.

Das erfindungsgemäße Automatenterminal umfasst folglich ferner wenigstens eine Schnittstelle zu wenigstens einem Telekommunikationsnetz, wobei die Schnittstelle bevorzugt zur Nutzung eines bereits bestehenden öffentlichen Telekommunikationsnetzes ausgebildet ist.

Die Erfindung umfasst somit ferner eine Datenverarbeitungseinrichtung mit einer Hardware- und/oder Software-basierte Verarbeitungslogik für ein solches Automatenterminal, wobei die Verarbeitungslogik ausgebildet ist, zum Erkennen und Abwickeln eines durch Benutzeingabe auswählbaren Dienstes unter Verwendung einer Schnittstellensteuerung mit in dem Automatenterminal integrierten Ein-/Ausgabeeinrichtungen zusammenzuwirken.

Die Erfindung schlägt darüber hinaus ein vernetztes System vor, welches eine Vielzahl von multifunktionalen Automatenterminals umfasst und wenigstens ein mit diesen wenigstens temporär verbindbares Kommunikationssystem wenigstens eines Dienstanbieters zum Kontrollieren wenigstens einer den Automatenterminals zugeordneten Vorrichtung zum Erkennen und Abwickeln eines unter Ansprechen auf eine Benutzereingabe auswählbaren Dienstes.

Die Erfindung wird nachfolgend anhand bevorzugter Ausführungsformen beispielhaft unter Bezugnahme auf die beigefügten Zeichnungen näher beschrieben.

In den Zeichnungen zeigen:
- Fig. 1: eine erste Ausführungsform eines durch einen Dienstanbieters zur Nutzung bereitgestellten multifunktionalen Automatenterminals mit integrierter multifunktionaler Datenverarbeitungseinrichtung,
- Fig. 2: eine gegenüber Fig. 1 modifizierte Ausführungsform, bei welcher die multifunktionale Datenverarbeitungseinrichtung dem Kommunikationssystem des Dienstanbieters zugeordnet ist,
- Fig. 3: eine weitere Modifikation gegenüber Fig. 1 betreffend die Zuordnung der multifunktionalen Datenverarbeitungseinrichtung zu einem zusätzlich eingebunden Kommunikationssystems eines speziellen Dienstanbieters,
- Fig. 4: eine der Fig. 1 entsprechende Ausführungsform, bei welcher jedoch das multifunktionale Automatenterminal von einer Vielzahl von Dienstanbieter zur Nutzung bereitgestellt ist,
- Fig. 5: eine der Fig. 2 entsprechende modifizierte Ausführungsform gemäß Fig. 4, und
- Fig. 6: eine entsprechend der Fig. 3 modifizierte Ausführungsform der Fig. 4.

Bevor nachfolgend einzelne bevorzugte, erfindungsgemäße Ausführungsformen näher beschrieben werden, sei darauf hingewiesen, dass gleiche oder gleichwirkende Komponenten in den Figuren mit gleichen Bezugszeichen belegt sind.

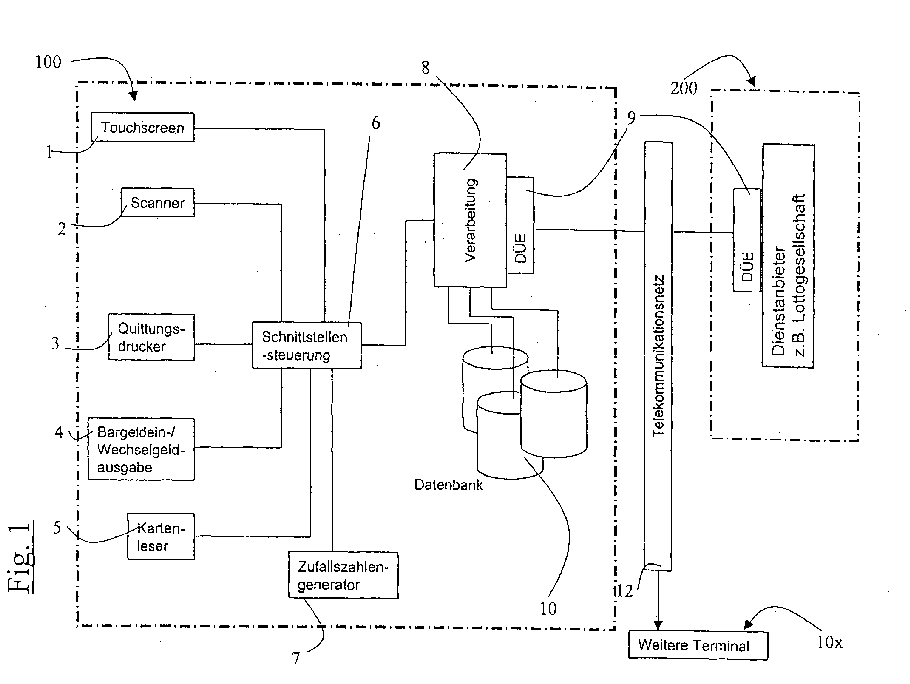

Eine erste Ausführungsform der Erfindung ist bei Fig. 1 dargestellt und umfasst zumindest ein unter Anbindung eines Kommunikationssystems 200 eines Dienstanbieters zur Nutzung bereitgestelltes multifunktionales Automatenterminal 100, 10x mit einer im Automatenterminal 100 integrierten multifunktionalen Datenverarbeitungseinrichtung 8.

Das aufgrund der integrierten multifunktionalen Datenverarbeitungseinrichtung 8 "intelligente" multifunktionale Automatenterminal 100 umfasst gemäß Fig. 1 eine Vielzahl von Ein-/Ausgabeeinrichtungen 1, 2, 3, 4, 5.

Eine erste Ein-/ Ausgabeeinrichtungen bildet ein Touchscreen 1, welcher zur Dateneingabe, wie beispielsweise Text über einen eingeblendete Tastatur, durch Antippen von Buttons oder Feldern usw., und/oder zur Datenausgabe, beispielsweise in Form einer Textausgabe, einer Preisinformation, eines Formulars und/oder von Bildschirmmasken ausgebildet ist. Ein Scanner 2 dient als weitere Ein-/ Ausgabeeinrichtungen zum Einlesen von Dokumenten und/oder Formularen, z.B. von Tippscheinen, um die darauf enthaltenen Informationen elektronisch, beispielsweise in Form eines PDF-Dokuments abgespeichert, weiterverarbeiten zu können. Ein Quittungsdrucker 3 dient zum Ausdrucken von Dokumenten und/oder Formularen, wie beispielsweise von Fahrscheinen, Eintrittskarten, Spielquittungen und Anderem. Eine Bargeldein-/Wechselgeldausgabe 4 dient zur Barzahlung mit Geldscheinen oder Münzen bei kostenpflichtigen Diensten. Ein Kartenleser 5 dient zum bargeldlosen Zahlungsverkehr, zur Identifikation über Chip-/Magnetstreifenkarten und zum Aufladen von Chip-/Magnetstreifenkarten.

Ferner umfasst das intelligente Automatenterminal 100 einen Zufallszahlengenerator 7, der zur Generierung von Zufallszahlen bzw. zufälligen Ereignissen von Glücksspielen und Ähnlichem dient.

Die Ein-/ Ausgabeeinrichtungen 1, 2, 3, 4, 5 und 7 sind über jeweilige, bei den Fig. nicht gesondert dargestellte Schnittstellen mit einer Schnittstellensteuerung 6 verbunden, die die angeschlossenen Ein-/Ausgabeeinrichtungen 1, 2, 3, 4, 5 und 7 im Wesentlichen durch Weiterleitung ankommender Informationen an die jeweilige Ein-/ Ausgabeeinrichtung und durch definiertes Zusammenfassen und Aufbereiten der von den Eingabeeinrichtungen kommenden Informationen definiert ansteuert.

Mit der Schnittstellensteuerung 6 ist eine, beispielsweise in Form eines Mikroprozessors ausgebildete, Verarbeitungseinrichtung 8 verbunden, die eine auf Hardware und/oder Software basierte Verarbeitungslogik aufweist. Diese verknüpft anwendungsspezifisch im Rahmen von jeweiligen, dienstbasierten Verarbeitungsregeln elektronisch die über die im Terminal integrierte Schnittstelleneinrichtung 6 von den Ein-/Ausgabeeinrichtungen empfangenen Informationen mit Inhalten von Datenbanken 10 und bereitet in Folge erzeugte Ausgangsinformationen für die Ausgabeeinrichtungen für die Schnittstelle 6 weiter verarbeitbar auf. Ferner verknüpft die Verarbeitungseinrichtung 8 im Rahmen der von der jeweiligen Dienstanwendung spezifizierten Regeln elektronisch über das Telekommunikationsnetz 12 von dem Kommunikationssystem 200 des Dienstanbieters zur Verfügung gestellte Informationen mit den Inhalten der Datenbanken 10 und bereitet in Folge erzeugte Ausgabeinformationen für die Schnittstelle weiterverarbeitbar auf.

Über die Verarbeitungseinrichtung 8 hat der Dienstanbieter ferner die Möglichkeit die Inhalte der Datenbanken 10 applikationsspezifisch zu ändern und/oder zu modifizieren.

Darüber hinaus wird durch die Verarbeitungseinrichtung 8 die im Terminal 100 angeordnete Datenübertragungseinrichtung 9 angesteuert, welche eine Schnittstelle zu dem Telekommunikationsnetz 12 umfasst.

Die Datenübertragungseinrichtungen 9 bewirken im vorliegenden Beispiel die Aufbereitung der von den jeweils angeschlossenen Komponenten übertragenen Informationen/Daten/Signale, insbesondere hinsichtlich der Signalform und/oder Adressierung derart, dass sie über das jeweilige Telekommunikationsnetz 200 gezielt an andere Komponenten übertragen werden können und, dass über das Telekommunikationsnetz 200 empfangene Informationen/Daten/Signale, insbesondere in Bezug auf eine korrekte Adressierung der Informationen nach den jeweiligen Dienstanwendungen spezifizierten Regeln durch die Datenverarbeitungseinrichtung 8 definiert weiterverarbeitbar sind.

Die Datenbank 10 enthält für die in dem zugrundeliegenden Ausführungsbeispiel beispielhaft beschriebene Ausführungsformen eines "intelligenten" Terminals die für die Abwicklung der jeweiligen Dienstanwendung notwendigen Datensätze, beispielsweise Spielvarianten, Preise/Gebühren/Tarife, Spielscheinvarianten, Masken für Bildschirmdarstellungen, Druck-Layouts, Bezahlungsvarianten, Quittungsvarianten Zahlungsverifikationen und/oder Adressierungsinformationen.

Über das Kommunikationssystem 200 des spezifischen Dienstanbieters 11, beispielsweise einer Lottogesellschaft, welches ebenfalls eine Datenübertragungseinrichtung 9 umfasst, wird die Aktualisierung der Datenbanken 10 und der Regeln der Dienstanwendungen bewirkt. Ferner wird die Dienstleistung an sich zur Verfügung gestellt und kontrolliert, werden Abrechnungssysteme betrieben und die korrekte Abwicklung des Verkaufs überwacht.

Für die Übermittlung der Daten zwischen dem Terminal 100 und dem Kommunikationssystem 200 des Dienstanbieters kann im Wesentlichen jedes Telekommunikationsnetz 12 verwendet werden, wobei im Wesentlichen lediglich die Schnittstellen der Datenübertragungseinrichtungen 9 von dem Terminal 100 und dem Kommunikationssystem 200 entsprechend anzupassen sind. Das Telekommunikationsnetz 12 kann somit öffentlich oder nicht öffentlich sein, beispielsweise auch ein VPN, ein LAN und/oder das Internet zur Übertragung der von der Datenübertragungseinrichtung 9 aufbereiteten Signale insbesondere an örtlich entfernte Komponenten umfassen.

Ferner kann das Telekommunikationsnetz 12 vermittelt und/oder nicht vermittelt sein, sowie leitungsgebunden oder schnurlos, insbesondere funkübertragen sein.

Darüber hinaus können weitere Terminals 10X über das Telekommunikationsnetz 12 mit dem Terminal 100 und/oder dem Kommunikationssystem 200 vernetzt sein.

Durch die Vielzahl der in dem erfindungsgemäßen Terminal integrierten Funktionen und deren Kombinationen ist folglich eine Vielzahl an durchführbaren Diensten bereitstellbar. Über die Bargeldein/-ausgabe 4 und den Kartenleser 5 sind beispielsweise kostenpflichtige Informationsdienste, das Aufladen von Geldkarten oder Mobiltelefonkarten und/oder das eBanking durchführbar. Unter zusätzlicher Einbindung des Quittungsdruckers 3 durch die Schnittstellensteuerung 6 können beispielsweise auch Dienste wie das Ausstellen von Eintrittskarten und/oder Fahrkarten bereitgestellt werden und/oder eCommerce abgewickelt werden. Bei zusätzlicher Einbindung des Zufallszahlengenerators 7 können Glücksspiele angeboten werden und unter entsprechender Einbindung des Scanners 2 auch das Teilnehmen an einer staatlichen Lotterie beispielsweise ermöglichen. Der Touch-Screen 1 oder gegebenenfalls ein normaler Bildschirm mit zugeordneter Tastatur ist zweckmäßigerweise bei jedem angebotenen Dienst mit eingebunden, wobei hierüber ferner zweckmäßiger Weise ein unentgeltlicher Informations- und/oder Hilfedienst abrufbar ist.

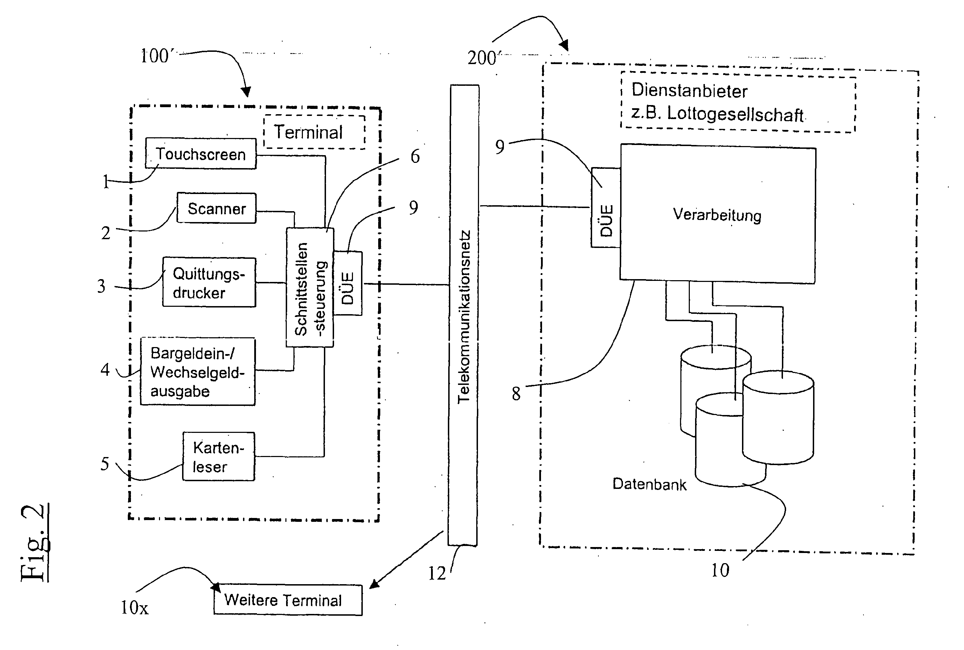

Gemäß der in Fig. 2 dargestellten Ausführungsform ist das Automatenterminal 100' ohne Datenverarbeitungseinrichtung 8 und Datenbanken 10 ausgebildet. Diese sind unmittelbar dem Kommunikationssystem 200'des Dienstanbieters zugeordnet.

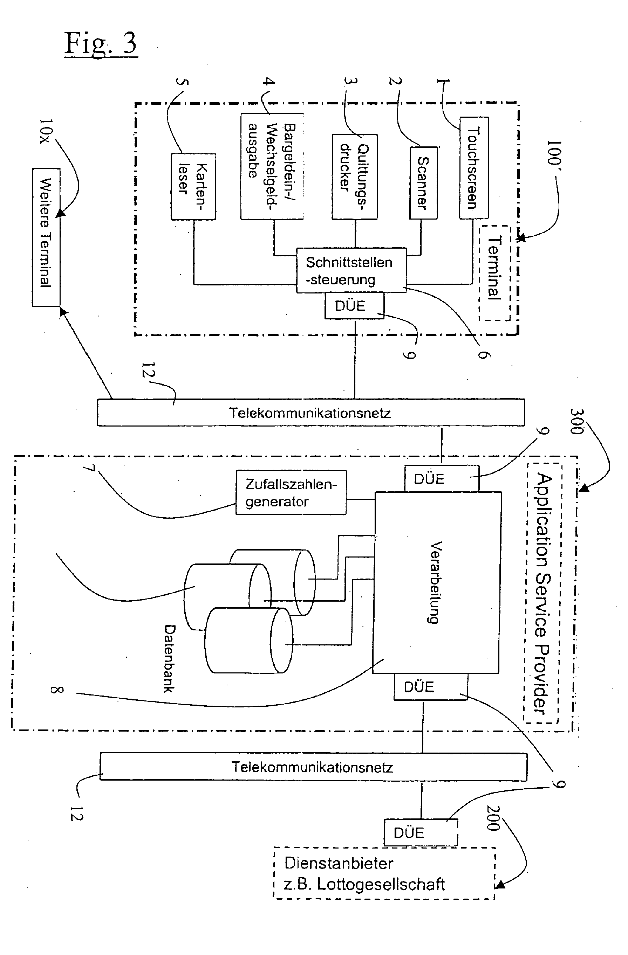

In dem modifizierten Ausführungsbeispiel der Fig. 3 ist im Gegensatz zu den Ausführungsbeispielen gemäß Fig. 1 und 2, bei welchen der Anbieter der Dienstanwendungen die Softwareverwaltung und die Steuerung des Terminals über das Telekommunikationsnetz 12 unter Verwendung seines Kommunikationssystem 200 oder 200' unmittelbar übernimmt, das Kommunikationssystem 300 eines hierfür spezialisierten Dienstanbieters zwischengeschaltet.

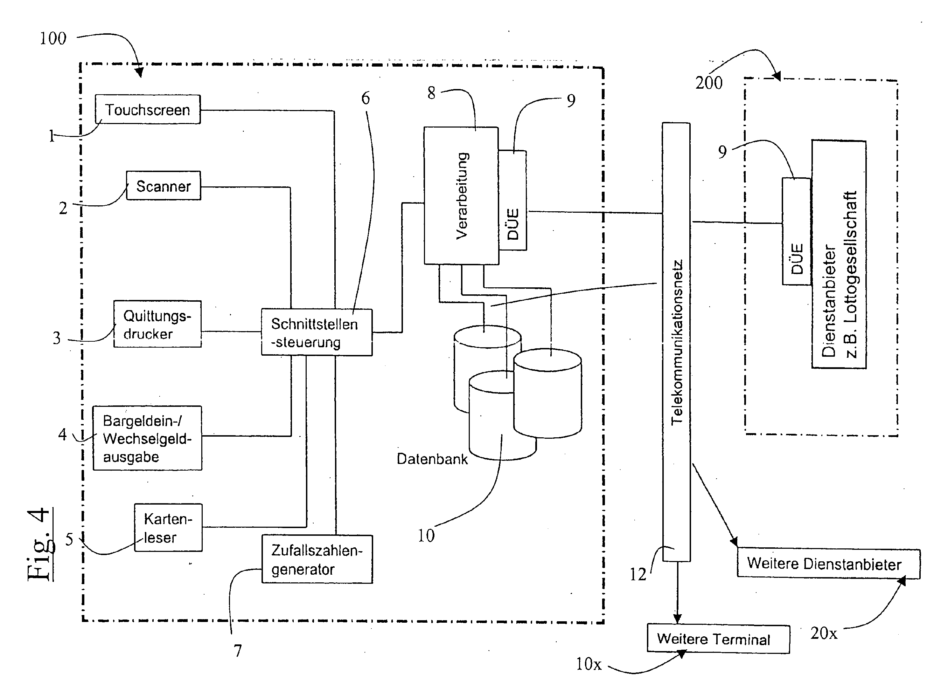

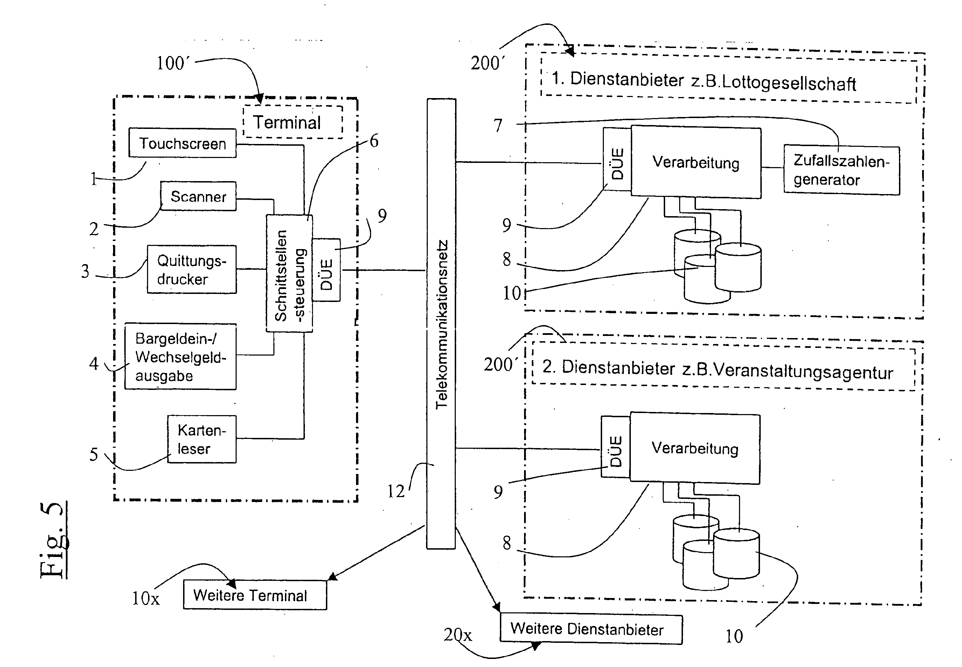

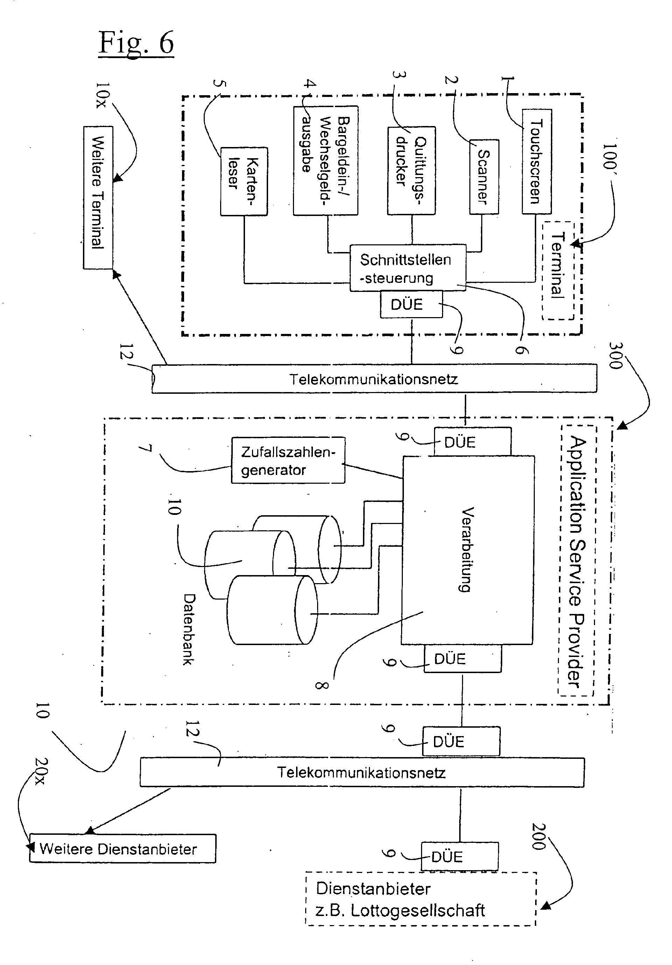

Eine Veränderung oder Erweiterung der Dienste bedarf im Wesentlichen lediglich eines Updates, insbesondere Software-Updates für die Verarbeitungseinrichtung 8, die Datenübertragungseinrichtungen 9 und gegebenenfalls die Schnittstellensteuerung 6. Dies ermöglicht auf einfache Weise ferner erfindungsgemäße Automatensysteme, bei welchen, wie bei den Figuren 4, 5 und 6 dargestellt, wenigstens ein multifunktionalen Terminal 100 oder 100' von einer Vielzahl von Dienstanbietern unter Verwendung jeweils zugeordneter Kommunikationssysteme 200, 200', 20x, 300 gemeinsam nutzbar ist.

Es sei darauf hingewiesen, dass anwendungsspezifisch verschiedene Ein-/Ausgabeeinrichtungen 1, 2, 3, 5 und 6 oder entsprechende Funktionen dieser Einrichtungen beispielsweise auch durch einen mittels einer entsprechenden Datenübertragungseinrichtung an das Telekommunikationsnetz 12 angeschlossenen PC übernommen werden können. Hierbei ist die Datenverarbeitungseinrichtung 9 und die Datenbank 10 jedoch bevorzugt, insbesondere zur Vermeidung von Manipulationen im Kommunikationssystem 200*'* oder 300 angeordnet. Ferner kann es hierbei sinnvoll sein, den Touch-Screen 1 durch einen Bildschirm mit Tastatur und gegebenenfalls Maus zu ersetzen.

Die erfindungsgemäß erwirkten Vorteile des multifunktionalen Gesamtsystems ergeben sich folglich insbesondere bei einer Anbindung einer Vielzahl von Dienstanbietern gemäß den Figuren 4 bis 6, also insbesondere durch Zusammenführen einer Vielzahl von abwickelbaren, unterschiedlichen Dienstfunktionalitäten über jeweils ein einziges Terminal ein im Wesentlichen ortsunabhängiges flächendeckenderes POS-Netz (Point Of Sale) bei gleichzeitig gesenkten Herstellungs- und Wartungskosten aufzubauen, welches ferner auch einem Benutzer das Abwickeln einer Vielzahl von separaten Diensten durch Nutzung lediglich eines Terminals ermöglicht.

## Patentansprüche

1. Multifunktionales öffentliches Automatenterminal (100, 100*'*) zum Abwickeln von wenigstens zwei verschiedenen, voneinander unabhängigen Diensten mit wenigstens einer öffentlich zugänglichen Ein- und Ausgabeeinrichtung (1, 2, 3, 4, 5,) und einer zugeordneten Vorrichtung (6, 8) zum Erkennen und Abwickeln eines unter Ansprechen auf eine Benutzereingabe auswählbaren Dienstes.

2. Automatenterminal nach Anspruch 1, ferner **dadurch gekennzeichnet, dass** die zugeordnete Vorrichtung eine mit den Schnittstellen der Ein- und Ausgabeeinrichtungen (1, 2, 3, 4, 5,) verbundene Schnittstellensteuerung (6) und wenigstens eine mit der Schnittstellensteuerung (6) verbindbare Datenverarbeitungseinrichtung (8) umfasst, die zum Erkennen und Abwickeln eines durch Benutzeingabe ausgewählten Dienstes mit den jeweiligen Ein-/Ausgabeschnittstellen zusammenwirken.

3. Automatenterminal nach vorstehendem Anspruch, ferner **dadurch gekennzeichnet, dass** jede Datenverarbeitungseinrichtung (8) Zugriff auf wenigstens eine Datenbank (10) mit abrufbar gespeicherten spezifischen Dienstbasierten Daten hat.

4. Automatenterminal nach einem der vorstehenden Ansprüche, ferner **gekennzeichnet durch** eine im Terminal (100) integrierte, mit wenigstens einem Kommunikationssystem (200, 200', 300) wenigstens eines Dienstanbieters zumindest temporär zum Datenaustausch verbindbare Datenverarbeitungseinrichtung (8) und/oder Datenbank (10).

5. Automatenterminal nach einem der vorstehenden Ansprüche, ferner **gekennzeichnet durch** eine zumindest temporäre Datenübertragungsverbindung zu wenigstens einer, in wenigstens einem Kommunikationssystem wenigstens eines Dienstanbieters integrierten Datenverarbeitungseinrichtung (8) und/oder Datenbank (10).

6. Automatenterminal nach einem der vorstehenden Ansprüche, ferner **gekennzeichnet durch** wenigstens eine Datenübertragungseinrichtung (9), welche dienstbasierte spezifische Daten zur zielgerichteten Übertragung über ein Telekommunikationsnetz transformiert und/oder Dienstbasierte spezifische Daten nach Erhalt über ein Telekommunikationsnetz zur zielgerichteten Weiterleitung rücktransformiert.

7. Automatenterminal nach einem der vorstehenden Ansprüche, ferner **gekennzeichnet durch** wenigstens eine Schnittstelle zu wenigstens einem Telekommunikationsnetz (12), insbesondere zu einem öffentlichen Telekommunikationsnetz.

8. Automatenterminal nach einem der vorstehenden Ansprüche, ferner **dadurch gekennzeichnet, dass** der Inhalt der Datenbank (10) und/oder die Verarbeitungslogik der Datenverarbeitungseinrichtung (8) über das wenigstens eine Kommunikationssystem (200, 200', 300) wenigstens eines Dienstanbieters kontrollierbar sind.

9. Datenverarbeitungseinrichtung für ein Automatenterminal nach einem der vorstehenden Ansprüche.

10. Datenverarbeitungseinrichtung für ein Automatenterminal nach vorstehendem Anspruch, ferner **gekennzeichnet durch** eine Hardware- und/oder Software-basierte Verarbeitungslogik, die zum Erkennen und Abwickeln eines **durch** Benutzeingabe auswählbaren Dienstes unter Verwendung einer Schnittstellensteuerung zum Zusammenwirken mit in dem Automatenterminal integrierten Ein-/Ausgabeeinrichtungen ausgebildet ist.

11. Datenverarbeitungseinrichtung für ein Automatenterminal nach vorstehendem Anspruch, ferner **dadurch gekennzeichnet, dass** die Software-basierte Verarbeitungslogik über wenigstens ein mit dem Automatenterminal wenigstens temporär verbindbares Kommunikationssystem (200, 200', 300) wenigstens eines Dienstanbieters kontrollierbar ist.

12. System umfassend eine Vielzahl von multifunktionalen Automatenterminals (100, 100*'*) nach einem der vorstehenden Ansprüche und wenigstens ein mit diesen wenigstens temporär verbindbares Kommunikationssystem (200, 200', 300) wenigstens eines Dienstanbieters zum Kontrollieren wenigstens einer den Automatenterminals (100, 100') zugeordneten Vorrichtung (6, 8) zum Erkennen und Abwickeln eines unter Ansprechen auf eine Benutzereingabe auswählbaren Dienstes.
